# EUROPEAN PATENT APPLICATION

(11) **EP 1 400 823 A1**
(43) Date of publication of application: **24.03.2004**
(21) Application number: 02360271.7
(22) Date of filing: 20.09.2002
(51) Int. Cl.: G02B 6/35

(54) **Planar optical waveguide switching device using mirrors**

(71) Applicant: Avanex Corporation, Fremont, CA 94538 (US)
(72) Inventor: Blau, Gerd, Dr., 70435 Stuttgart (DE); Burger, Gerardus Johannes, Hengelo, 7556 TX (NL)
(74) Representative: Haines, Miles John

(57) **Abstract**

The present invention relates to an optical waveguide switching device for directing light from N input fibers (13) to M output fibers (15) without electrical conversion, comprising a waveguide optical input port (12), a waveguide optical output port (14), and rotary mirror means (20, 24) arranged to direct light from said input port (12) to said output port (14). The optical waveguide switching device is provided with a planar structure (34) between said rotary mirror means (20, 24) and said output port (14) within which light propagates from said rotary mirror means to said output port.

## Description

The present invention relates to an optical waveguide switching device for directing light from N input fibers to M output fibers without electrical conversion, comprising a waveguide optical input port, a waveguide optical output port, and rotary mirror means arranged to direct light from said input port to said output port.

An optical waveguide switching device as mentioned above is for example disclosed in EP 1 102 096 A2. This document shows an optical cross connect constructed of micro-electro-mechanical systems (MEMS) tilt mirror arrays. The optical cross connect selectively routes optical signals to optic fibers. It includes a lens array for directing optical signals from a fiber array to the MEMS mirror array. Individual mirror elements in the mirror array reflect the optic signals to additional optic elements such as a planar mirror, a transmissive/reflective optical element or a second MEMS mirror array for routing the optical signals to output optic fibers.

An optical waveguide switching device is also known for example from WO 01/67172 A1. This document discloses an integrated optical device for selectively directing light from one or more input waveguides to one or more output waveguides. The device comprises a slab waveguide, one or more input waveguides directing light into the slab waveguide and one or more output waveguides receiving light from the input waveguide after it has traveled through the slab waveguide. In order to selectively control transmission of light between the input and output waveguides, one or more refracting portions are provided in the slab waveguide, the refractive index of which can be altered to refract the light as it passes therethrough. The refractive portions are used to steer a light beam.

Generally, optical waveguide switching devices are essential components in optical communication networks for determining and controlling the path along which optical signals propagate. An optical switch has N input ports and M output ports and allows to selectively route an optical signal fed into one of the N input ports to anyone of the M output ports without the need of an electrical conversion of the optical signal. Such optical switching devices are usually controlled by electrical switching signals that are generated, for example, by a network management system.

Optical cross connects (OXC) are for example components of an optical communication network which require optical switching devices.

The characteristics of such switching devices must correspond to a list of specifications defined by the potential customer, including insertion loss, insertion loss homogeneity, polarization-dependent loss, cross talk, back reflection, wavelength-dependent losses, size and manufacturability.

Some of the known N x M switching devices with optical characteristics that fulfill such optical specifications are based on three-dimensional beam steering using separate optical, electrical and micro-mechanical parts. The optical cross connect disclosed in EP 1 102 096 A2 uses for example such a three-dimensional beam steering. However, these technical solutions result in high fabrication and assembly costs.

Existing optical switching devices based on a two-dimensional concept, for example as disclosed in WO 01/67172 A1, are cost-effective in manufacturing, but do not correspond to the full range of optical specifications, particularly in view of insertion loss homogeneity and scalability to higher port numbers.

In view of the above, it is therefore an object of the present invention to provide an optical waveguide switching device which overcomes the above-mentioned problems. Particularly, the optical waveguide switching device shall be cost-effective to manufacture and shall fulfill all optical requirements, especially in view of insertion loss homogeneity and scalability to higher port numbers.

This object is solved by the optical waveguide switching device as outlined above by providing a planar structure between said rotary mirror means and said output port within which planar structure light propagates from said rotary mirror means to said output port.

The planar structure between the rotary mirror means and the output port prevents spreading of light perpendicular to the optical plane. This results in an ultra-flat component that can be produced and assembled through batch fabrication (e.g. standard MEMS actuator fabrication). The flat component, including the said planar structure, MEMS mirror means and actuators, is suited for hermetic sealing using a cap.

Further, the two-dimensional or planar arrangement of the device allows to integrate all optical functions on a single substrate. The planar arrangement also allows to integrate detectors for monitoring and control onto the same substrate.

The present invention can be used advantageously to build compact mid-sized switching modules with superior performance data (good insertion loss homogeneity) and low cost manufacturability than actually achieved with the standard technologies, e.g. three-dimensional beam steering devices or two-dimensional digital mirror arrays or by the switch arrays.

The solution according to the present invention combines planar lightwave circuits (PLC) with micro-mechanical actuators in a special design that allows to take full profit of the manufacturing advantages of a two-dimensional concept with the optical performance of an analog three-dimensional beam steering switch. The present invention allows to develop a switching device with ultra-low losses and excellent loss homogeneity. Manufacturing costs of the device can be especially low through batch fabrication and automated assembly.

In a preferred embodiment, the planar structure is a planar waveguide or slab waveguide.

The advantage of this measure is that the slab waveguide is easy to manufacture. However, it is also possible to provide the planar structure as an etched well forming a free-space region.

In a further preferred embodiment, said waveguide optical input and output ports and said rotary mirror means are arranged in one plane. Preferably, said rotary mirror means comprises a first array of mirrors being rotatably arranged in one plane. More preferably, said rotary mirror means comprises a second array of mirrors being rotatably arranged in the same plane as said first array. Preferably, said mirrors of at least one of said arrays are arranged in a straight line.

These measures result in a very cost-effective and easy to realize arrangement.

In a preferred embodiment, lens means for collimating light are provided between said input port and said first rotary mirror means. Preferably, said lens means are formed in said planar waveguide, preferably as curved slots with gold coating. More preferably, said lens means is provided as a collimator array.

These measures have proved to be very advantageous in view of optical characteristics and manufacturing complexity.

However, it is also preferred to arrange said mirrors of at least one mirror array in a concave line. This arrangement allows to collimate the light reflected by the mirrors (in neutral position). An alternative is to arrange the mirrors in a pre-rotated state.

In a further preferred embodiment, electrostatic comb drives are provided for actuating said mirrors. Preferably, said electrostatic comb drives are designed to rotate said mirrors about one single axis perpendicular to the planar waveguide structure to any position defined by an analogue drive voltage.

This kind of actuator allows a very precise rotation of the mirrors.

In a further preferred embodiment, said planar waveguide and said mirror means are arranged such that a gap therebetween is less than 100 µm. Preferably, said gap is filled with air/gas or any liquid. Preferably, said planar waveguide comprises waveguide edges facing said mirror means, the waveguide edges being antireflection coated and polished.

These measures result in a reduction of polarization-dependent Fresnel reflection and in a minimization of cross talk due to Fresnel reflection.

In a preferred embodiment, said slab waveguide comprises a region having a modified effective refraction index, said region being designed to collimate light.

Further features and advantages can be taken from the following description and the enclosed drawings.

It is to be understood that the features mentioned above and those to be explained below can be used not only in the respective combinations indicated, but also in other combinations or in isolation, without leaving the scope of the present invention.

Embodiments of the invention are shown in the drawings and will be explained in more detail in the description below with reference to same. In the drawings:
- Fig. 1: is a plan view of an optical waveguide switching device according to a first embodiment;
- Fig. 2: is a plan view of an optical waveguide switching device according to a second embodiment;
- Fig. 3a: is a plan view of an optical waveguide switching device according to a third embodiment;
- Fig. 3b: is a plan view of an optical waveguide switching device according to a fourth embodiment;
- Fig. 4a: is a schematic sectional view of a rotational mirror used in the optical waveguide switching device;
- Fig. 4b: is a schematic sectional view of a rotational mirror according to a second embodiment;
- Fig. 4c: is a schematic sectional view of a rotational mirror according to a third embodiment;
- Fig. 5: is a schematic sectional view of the optical waveguide switching device as shown in Fig. 2;
- Fig. 6: is a schematic plan view showing a part of the optical waveguide switching device of Fig. 1;
- Fig. 7: is a schematic plan view of a lens means for collimating light; and
- Fig. 8: are schematic plan views of different designs of a waveguide structure facing the rotational mirror.

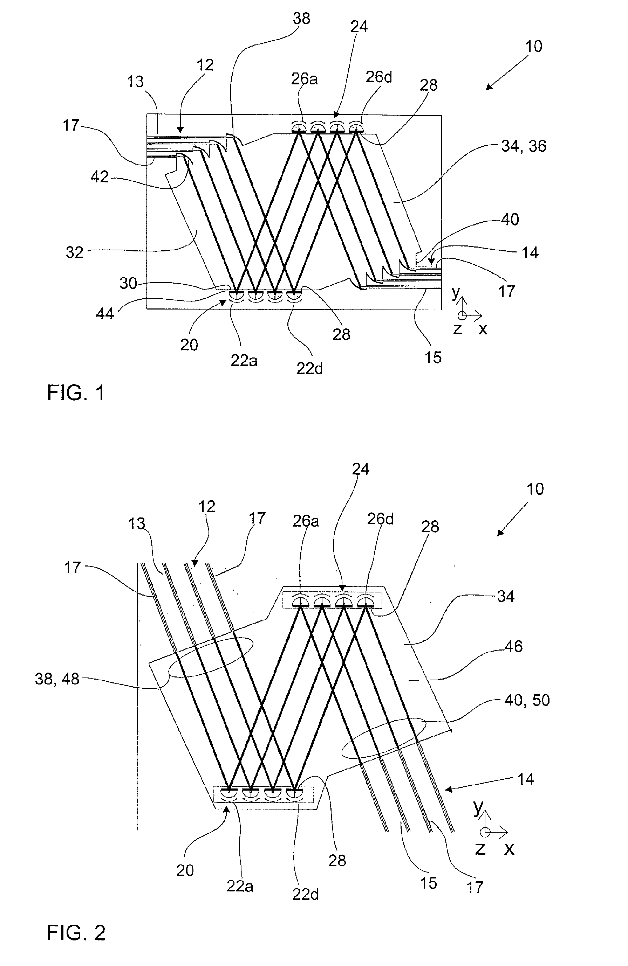

In Fig. 1, an optical waveguide switching device (in short: waveguide switch) is depicted in a schematic plan view illustration and is referenced with reference numeral 10. The waveguide switch 10 may be part of an optical cross connect device, which is a key component of all optical networks.

The waveguide switch 10 is designed as an integrated planar light wave circuit (PLC) which typically comprises a substrate layer on which further layers for guiding light are provided.

Since the general design of such PLCs is known, it will not be described in detail. In short, a planar light wave circuit can be made of a silica multilayer deposited on a silicon substrate. The multilayer is chosen to have a core with increased refractive index that guides the light. Lateral confinement of the PLC can be achieved through etching of the core and covering of the etched core with a silica layer with reduced refractive index.

The waveguide switch 10 comprises an optical input port 12 and an optical output port 14. In the present case, both the input port and the output port 12, 14 are the end sections of optical fibers or waveguides 13 and 15, respectively. The waveguides 13 and 15 are formed in the multilayer by providing lateral confinement regions 17 defining the respective waveguides 13, 15 (in the present case four input waveguides and four output waveguides).

The waveguide switch 10 further comprises a first array 20 of mirrors 22a to 22d and a second array 24 of mirrors 26a to 26d.

Each mirror 22a to 22d and 26a to 26d of the first and second mirror arrays is rotatably mounted with their reflecting surfaces 28 of both arrays facing each other. The rotational axis of the mirrors 22, 26 extends perpendicularly to the multilayer of the waveguide switch (that is perpendicular to the drawing plane of Fig. 1). A detailed description of the design of these mirrors will follow below.

As shown in Fig. 1, the mirrors 22a to 22d and 26a to 22d are arranged along a straight line. Further, what may not be seen in Fig. 1, the mirrors lay in the same plane.

The waveguide switch 10 further comprises a region between the input port 12 and the output port 14 which is indicated by reference numeral 32. As it is apparent from Fig. 1, both mirror arrays 20, 24 are located adjacent to a borderline 30 (what is actually an etched area) outside the region 32.

In this region 32, a planar waveguide 34 is introduced. In the present case, this planar waveguide is provided as a slab waveguide 36. Since the structure of such a slab waveguide 36 is generally known, a detailed description may be omitted.

Within the slab waveguide 36, first and second optical means 38 and 40, respectively, are provided. The first optical means 38 are located adjacent the input port 12 whereas the second optical means 40 are located adjacent the output port 14. The first optical means 38 serves to collimate light, whereas the second optical means 40 serves to focus the beams on the waveguides of the output port 14. Hence, the first optical means comprises collimating lenses and the second optical means comprises focusing lenses being of the same type as the collimating lenses.

In the present embodiment, the optical means 38, 40 are defined as curved slots 42 which are coated with a reflective material (for example gold). The curved slots 42, that is the respective reflecting surface, are directed such that a light beam is reflected towards the first mirror means 20 in case of the first optical means and towards the waveguides 15 of the output port 14 in case of the second optical means 14.

In order to realize a waveguide switch, the mirrors of the mirror arrays are arranged such that a light path from the input port to the output port is defined. That means in other words that the mirrors 20a to 20d of the first mirror means 20 reflect light beams from the input port to the respective mirrors 26a to 26d of the second mirror means, which in turn reflect these light beams to the output port 14.

By actuating any mirror 20a to 20d of the first mirror means 20, it is possible to direct the reflected light beam to any of the mirrors 26a to 26d of the second mirror means 24. In the same way, it is possible to reflect a light beam to any of the waveguides 15 of the output port 14 by actuating the respective mirror 26a to 26d of the second mirror means 24. In Fig. 1, the path of the light beams are shown for a non-actuated condition of the mirrors 22, 26.

As already mentioned, the slab waveguide 36 is provided between the input port and the output port 12, 14. Hence, the light beams travel through the slab waveguide entering same at the transition from the confined waveguides 13 to the slab waveguide and leaves the slab waveguide at the transition to the confined waveguides of the output port 14. Since the slab waveguide 36 impedes the light beams to spread perpendicular to the optical surface, the need for collimators in this dimension is eliminated. That means in other words that the optical means 38 have to collimate light beams only in one dimension, namely in the horizontal plane.

As can be seen in Fig. 1, the mirror arrays 20, 24 are mounted on the substrate of the waveguide switch 10 outside the slab waveguide 36 so that a gap 44 is defined between the edge of the slab waveguide 36 and the reflecting surfaces 28 of the mirrors 22, 26. This gap 44 is preferably less than 100 µm.

In Fig. 2, a second embodiment of a waveguide switch 10' is illustrated. For the sake of simplicity, like parts as in Fig. 1 are indicated with like reference numerals. In contrast to the first embodiment shown in Fig. 1, the waveguide switch 10' comprises a planar structure 34 which is formed as a free space region 46. The free space region 46 is an etched well in the planar light wave circuit within which light can propagate.

In order to collimate the light beams exiting the waveguides 13 of the input port 12, a first optical means 38 in form of a collimating lens system 48 is provided. The collimating lens system 48 is mounted on the substrate of the waveguide switch 10' adjacent to the input port 12 so that the light beams traveling through the waveguides 13 are collimated and directed to respective mirrors 22a to 22d of the first mirror means 20. In contrast to the mirror means of the first embodiment, the collimating lens system 48 has to collimate the light beams in two dimensions, that is not only in the horizontal, but also in the vertical direction.

The second optical means 40 is also mounted on the substrate of the waveguide switch 10' and is formed as a focusing lens system 50. The focusing lens system 50 is of the same type as the collimating lens system 48 and is located in the immediate vicinity of the output port 14. The focusing lens system 50 serves to focus the light beams reflected from the mirrors 26a to 26d of the second mirror means 24 into the respective waveguides 15 of the output port 14.

Although there is a design difference between both waveguide switches 10, 10' shown in Figures 1, 2, the function and operation of the waveguide switches 10, 10' is identical. Both waveguide switches allow light beams fed via the waveguides 13 of the input port 12 to be fed into any of the waveguides 15 of the output port 14. This cross connecting function is achieved by actuating respective mirrors of the first and second mirror means 20, 24. For actuating the respective mirrors 22, 26, that is for rotating about an axis perpendicular to the substrate of the waveguide switch, electrostatic comb drives may be provided. Such electrostatic comb drives are not shown in the figures since their general design is known and for example disclosed in WO 02/16997 A1. The electrostatic comb drives may be operated by supplying an analogue voltage, the value of the analogue voltage determining the angle the mirror is moved.

Both embodiments of a waveguide switch 10, 10' have in common that all optical components, namely first and second optical means and first and second mirror means, are located in the same plane so that the light also propagates between these optical components in this plane. This inventive approach allows to design very flat integrated optical circuits.

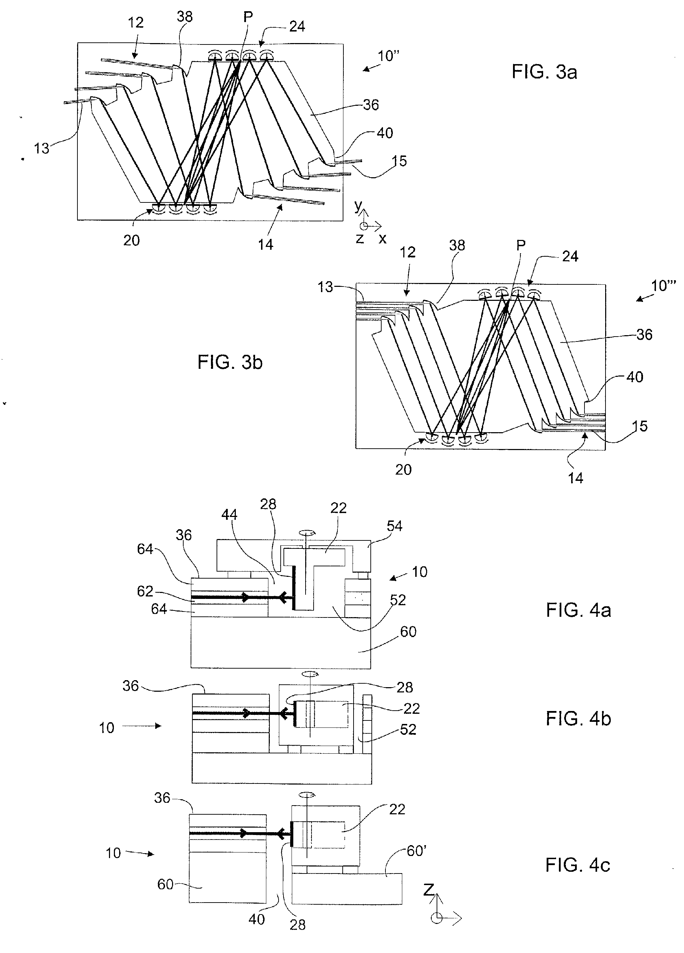

In Fig. 3a, a third embodiment of a waveguide switch 10" is shown. Its design substantially corresponds to the design of the waveguide switch 10 shown in Fig. 1. Therefore, only the design difference will be described below. In the first embodiment of the waveguide switch 10, the waveguides 13, 15 of both the input port 12 and the output port 14 are arranged parallel to each other. Provided that the respective curved slots 42 of the optical means are formed identically, the light beams reflected by the slots 42 are also parallel. This kind of light guidance requires different tilting or rotational angles for the mirrors 22, 26. Particularly, the mirrors at the edges of the mirror arrays 20, 24 require larger angle ranges than the mirrors in-between.

To overcome this problem, the waveguide switch 10'' uses waveguides 13, 15 extending non-parallel to each other. As can be seen in Fig. 3a, the waveguides 13, 14 converge towards the slab waveguide. The optical means 38 are adapted such that the light beams reflected to the mirror array 20 also converge with the result that the light beams reflected by the mirrors 22a to 22d (which are in a non-actuated neutral position) are focused on one central point P in the plane of the second mirror array 24. This point P lies in the middle of the mirror array 24 so that the rotational angle for reaching any of the mirrors 26a to 26d of the second mirror array 24 is the same for all mirrors of the first mirror means 20.

As may be seen in Fig. 3a, the same arrangement of the waveguides 13 and the optical means 38 have been employed for the waveguides 15 of the output port 14 and the second optical means 40.

In Fig. 3b, a modification of the waveguide switch 10" of Fig. 3a is shown and referenced with reference numeral 10'''. In order to direct the light beams reflected by the mirrors 22a to 22d of the first mirror means 20 towards one common point P, the mirrors 22a to 22d are arranged on a curved line so that the mirror means 20 has a concave shape. This allows to design the waveguides 13 and the optical means 38 identical to the waveguide switch 10 of Fig. 1. In other words, the waveguides 13 are parallel to each other and the light beams reflected by the optical means 38 are also parallel. Instead of arranging the mirrors on a curved line it may also be possible to arrange the mirrors in a pre-rotated state.

It is to be noted that also a combination of the above mentioned approaches shown in Fig. 3a and 3b for focusing the light beams into one central point P is possible.

With reference to Figures 4a to 4c, different design approaches for the mirrors will be described below. In all three approaches, the mirrors are fabricated by using micro-electro-mechanical techniques. Generally, MEMS is a technique used in the fabrication of optical switches. The MEMS is constructed in a manner similar to the making of integrated circuits by using photo-lithographic and etching operations. However, instead of transistors, the lithographic process builds very small devices that move (tilt) when directed by an electric current.

In Fig. 4a, a cross-sectional view of the waveguide switch 10 is depicted. For the sake of simplicity, the view is limited to the region of the transition between the slab waveguide 36 and a mirror 22 of the mirror array 20. As can be seen in this figure, the waveguide switch 10 comprises a substrate 60 on which the slab waveguide 36 is deposited. The slab waveguide 36 has a multilayer structure comprising a core layer 62 sandwiched between confinement layers 64. The light propagates within the core layer 62. It is to be noted that often the multilayer structure comprising the substrate, the confinement layers and the core layer is called slab waveguide.

The rotational mirror 22 is deposited on top of the planar light wave circuit which is constituted by the substrate 60 and the slab waveguide 36. The mirror 22 with its reflecting surface 28 extends in a direction perpendicular to the substrate 60 and into a well 52 etched into the PLC. Hence, the mirror 22 is supported by an element 54 bridging the well 52 and the port carried by the PLC.

Fig. 4a also shows the gap 44 defined between the surface 28 of the mirror 22 and the edge of the slab waveguide 36. This gap 44 is either empty (vacuum) or filled with air/gas or any liquid. Furthermore, the waveguide edge facing the surface 28 of the mirror 22 may be coated with an antireflective material and polished. The distance between the waveguide edge and the surface 28 is preferably less than 100 µm.

In Fig. 4b, a different possibility of an integration of the rotational mirror 22 is shown. In contrast to the approach of Fig. 4a, the rotational mirror 22 is mounted in the etched well 52 of the PLC.

In both approaches shown in Figures 4a and 4b, the mirror 22 and the slab waveguide 36 are mounted on the same substrate 60. In contrast thereto, the approach shown in Fig. 4c employs separate parts for supporting the slab waveguide 36 and the mirror 22. That is, the slab waveguide 36 is deposited on the substrate 60 and the mirror 22 is mounted on a separate substrate 60'. Hence, the gap 44 extends through the plane of the substrate 60.

The advantage of this configuration is that the waveguide edge facing the surface 28 can be polished by standard polishing tools.

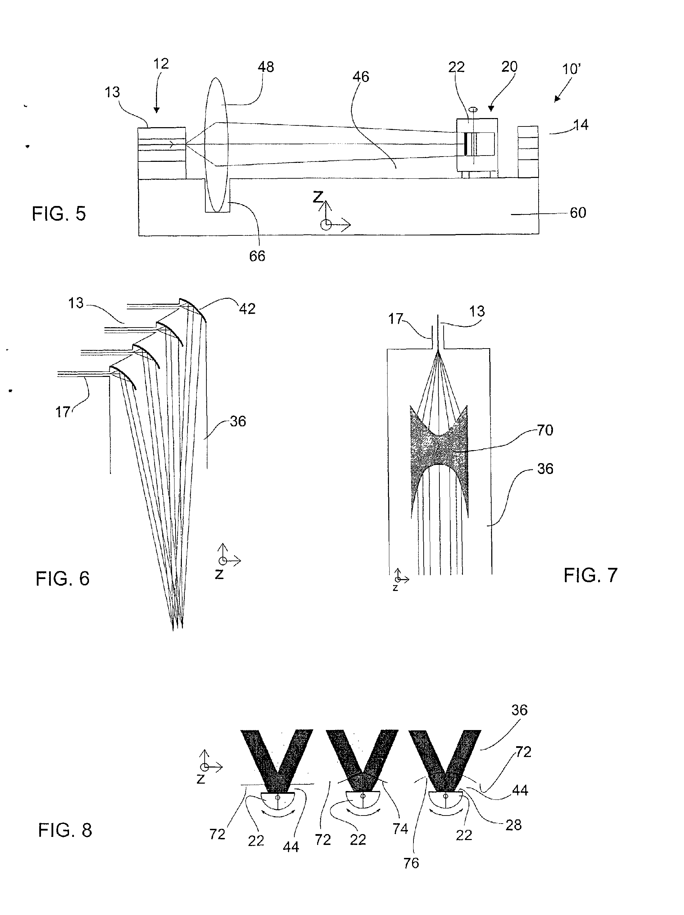

In Fig. 5, a cross section of the waveguide switch 10' is shown. As already mentioned with reference to Fig. 2, the planar structure 34 is provided as a free-space region 46, namely an etched well. This free-space region 46 extends from the input port 12 to the opposite output port 14. Within this free-space region 46, the rotational MEMS mirrors 22, 26 are mounted on the substrate 60 of the PLC. The design of the rotary mirror corresponds to that described with reference to Fig. 4b. However, it is to be understood that other designs are also possible.

The collimator lens system 48 is mounted and fixed in grooves or bumps 66 which are formed in the substrate 60 of the PLC.

As already mentioned before, the collimating lens system 48 serves to collimate the light exiting the waveguide 13 in two dimensions. However, it is also conceivable to provide a collimating lens for collimating in one dimension followed by a separate cylindrical lens to collimate the light beam in the second dimension.

With reference to the embodiment employing a slab waveguide, the function of the collimating lens system 48 is realized by curved slots 42 formed in the slab waveguide 36, the slots 42 being coated with a reflective material. This approach is shown in Fig. 6. Another approach for collimating light exiting a waveguide 13 is shown in Fig. 7. Here, the slab waveguide 36 comprises an area 70 having a modified refractive index. The form of this area is selected such that a collimating function is achieved. Beside the mentioned possibilities of collimating light, there are other possibilities conceivable for a person skilled in the art.

Fig. 8 shows three different possibilities to design the waveguide edge of the slab waveguide 36 facing the mirrors 22 and 26, respectively.

In the first case shown, the surface 72 of the waveguide edge is plane. In the second case shown, the surface has a triangular notch 74. In the third case shown in Fig. 8, the surface 72 comprises an arch-shaped notch 76.

The respective shape of the surface of the waveguide edge is selected to reduce polarization-dependent Fresnel reflection or to minimize cross talk due to Fresnel reflection.

Briefly summarized, the present invention provides for a waveguide switch which differs from known devices by a planar waveguide structure which is located in the same plane as the waveguides of the input and output ports. Moreover, the rotary mirrors are mounted in the same plane as the planar waveguide structure. These design solutions allow to build a very flat and compact waveguide switch.

## Claims

1. Optical waveguide switching device for directing light from N input fibers (13) to M output fibers (15) without electrical conversion, comprising
a waveguide optical input port (12),
a waveguide optical output port (14), and
rotary mirror means (20, 24) arranged to direct light from said input port (12) to said output port (14), **characterized in that**
a planar structure (34) is provided between said rotary mirror means (20, 24) and said output port (14) within which said light propagates from said rotary mirror means to said output port.

2. The optical waveguide switching device of claim 1, **characterized in that** said planar structure (34) is provided as a slab waveguide (36).

3. The optical waveguide switching device of claim 1, **characterized in that** said planar structure (34) is provided as a free-space region (46).

4. The optical waveguide switching device of any of the preceding claims, **characterized in that** said waveguide optical input and output ports (12, 14) and said rotary mirror means (20, 24) are arranged in the same plane.

5. The optical waveguide switching device of any of the preceding claims, **characterized in that** said rotary mirror means (20, 24) comprises a first array of mirrors (22 a-d) being rotatably arranged in one plane.

6. The optical waveguide switching device of claim 5, **characterized in that** said rotary mirror means (20, 24) comprises a second array of mirrors (26 a-d) being rotatably arranged in the same plane as said first array.

7. The optical waveguide switching device of claim 5 or 6, **characterized in that** said mirrors (22 a-d, 26 a-d) of at least one of said arrays are arranged in a straight line.

8. The optical waveguide switching device of claim 5 or 6, **characterized in that** said mirrors (22 a-d, 26 a-d) of at least one of said arrays are arranged in a concave shape/form and/or in a pre-rotated state.

9. The optical waveguide switching device of any of the preceding claims, **characterized in that** lens means (38) for collimating light are provided between said input port (12) and said first rotary mirror means (20).

10. The optical waveguide switching device of claim 2 and 9, **characterized in that** said lens means (38) are formed in said slab waveguide (36).

11. The optical waveguide switching device of claim 10, **characterized in that** said lens means (38) are provided as curved slots (42) in said slab waveguide (36).

12. The optical waveguide switching device of claim 3 and 9, **characterized in that** said lens means (38) is provided as a collimator array.

13. The optical waveguide switching device of any of the preceding claims, **characterized in that** electrostatic comb drives are provided for actuating said mirrors (22, 26).

14. The optical waveguide switching device of claim 13, **characterized in that** said electrostatic comb drives are designed to rotate said mirrors (22, 26) about one single axis to any position defined by an analog drive voltage.

15. The optical waveguide switching device of any of the preceding claims, **characterized in that** said planar waveguide (36) and said mirror means are arranged such that a gap (44) therebetween is less than 100 µm.

16. The optical waveguide switching device of claim 15, **characterized in that** said gap (44) is filled with air/gas or any liquid.

17. The optical waveguide switching device of claim 2, **characterized in that** said slab waveguide (36) comprises waveguide edges facing said mirror means (20, 24), the waveguide edges being antireflection coated and polished.

18. The optical waveguide switching device of claim 2, **characterized in that** said slab waveguide (36) comprises a region (70) having a modified effective refraction index, said region (70) being designed to collimate light.

19. The optical waveguide switching device of any of the preceding claims, **characterized in that** it is fabricated using micro-electro-mechanical system (MEMS) methods.
